# EUROPÄISCHE PATENTSCHRIFT

(11) **EP 2 558 725 B1**
(45) Veröffentlichungstag und Bekanntmachung des Hinweises auf die Patenterteilung: **08.05.2019**
(21) Anmeldenummer: 11708262.8
(22) Anmeldetag: 15.03.2011
(51) Int. Cl.: F04C 15/00, H02P 29/62, F04D 13/06, F04C 11/00, F04D 29/58, F04C 2/10, F04C 2/12, F04C 2/344

(54) **ELEKTRISCHE FÖRDERPUMPE UND VERFAHREN ZUM ANTREIBEN EINER ELEKTRISCHEN FÖRDERPUMPE**
ELECTRIC DELIVERY PUMP AND METHOD FOR OPERATING AN ELECTRIC DELIVERY PUMP
POMPE DE REFOULEMENT ÉLECTRIQUE ET PROCÉDÉ D'ENTRAÎNEMENT D'UNE TELLE POMPE

(30) Priorität: 16.04.2010 DE 102010027838
(43) Veröffentlichungstag der Anmeldung: 20.02.2013
(73) Patentinhaber: Robert Bosch GmbH, 70442 Stuttgart (DE)
(72) Erfinder: FUCHS, Alexander, 5421 Adnet (AT); ORTNER, Klaus, 5020 Salzburg (AT)
(86) Internationale Anmeldenummer: PCT/EP2011/053862
(87) Internationale Veröffentlichungsnummer: WO 2011/128165

(56) Entgegenhaltungen:
- EP-A1- 2 133 541
- WO-A1-2009/151033
- DE-A1- 19 919 462
- DE-A1- 19 942 955
- GB-A- 2 157 766
- US-A1- 2006 291 995
- US-A1- 2009 178 803
- O.C.N. Souto ET AL: "Induction motors thermal behaviour and life expectancy under non-ideal supply conditions", Ninth International Conference on Harmonics and Quality of Power. Proceedings (Cat. No.00EX441), vol. 3, 1 January 2000 (2000-01-01), pages 899-904, XP055266098, DOI: 10.1109/ICHQP.2000.896848 ISBN: 978-0-7803-6499-8

## Beschreibung

Die vorliegende Erfindung betrifft eine elektrische Kraftstoffpumpe gemäß dem Oberbegriff des Anspruchs 1.

### Stand der Technik

Als elektrische Förderpumpen zum Fördern von Kraftstoff in einem Kraftstoffeinspritzsystem, wie beispielsweise in einem Common Rail System, werden unter anderem Innenzahnradpumpen, Außenzahnradpumpen und Flügelzellenpumpen mit sogenannter integrierter Bauform eingesetzt, bei welcher die Förder- und Antriebseinheiten gemeinsam in einem Gehäuse vorgesehen sind.

In EP 1 933 033 A1 ist eine Innenzahnradpumpe beschrieben, welche einen Pumpenteil und einen Motorteil aufweist, wobei der Pumpenteil einen inneren Rotor mit Zähnen an dem äußeren Umfang, einen äußeren Rotor mit Zähnen auf seinem inneren Umfang und ein Pumpengehäuse aufweist, in welchem der innere Rotor und der äußere Rotor untergebracht sind. Der Motor enthält einen Rotator und einen Stator, welcher den Rotator dreht, wobei ein gemeinsames Element aus einem dauermagnetischen Material als Rotator und äußerer Rotor dient. Durch diese Konfiguration kann eine kompakte Bauweise erzielt werden.

In DE 10 2006 007 554 A1 ist eine Förderpumpe beschrieben, welche in einen Elektromotor integriert ist. Die Förderpumpe umfasst ein erstes Zahnrad und ein zweites Zahnrad. Zwischen den beiden Zahnrädern bildet sich ein Förderraum aus. Das zweite Zahnrad lagert in seiner Mitte auf einem Dorn. Das erste Zahnrad ist ein Außenzahnrad und bildet den Rotor, das zweite Zahnrad ist ein Innenzahnrad, welches im außermittigen Zentrum des ersten Zahnrads mitgeschleppt wird. Das erste Zahnrad umfasst eingeklebte Permanentmagnete, die über den Umfang verteilt angeordnet sind. Äußere Magnetfelderzeuger erzeugen ein umlaufendes, sich rotatorisch änderndes Feld, welches das direkte motorische Folgen des Rotors hervorruft.

In EP 1 600 635 A2 ist eine Innenzahnradpumpe beschrieben, welche einen Pumpenabschnitt mit einem inneren Rotor aufweist, welcher an seiner äußeren Peripherie mit Zähnen ausgebildet ist. Ein äußerer Rotor weist an seiner inneren Peripherie ausgebildete Zähne auf. Beide Rotoren sind in einem Gehäuse aufgenommen.

In GB 2 157 766 A ist eine Pumpe mit Elektromotor beschrieben, wobei der Elektromotor Ankerwicklungen aufweist, deren Enden an einen Kommutator anschlossen sind durch den die Ankerwicklungen bestromt werden.

Die im Stand der Technik bekannten elektrischen Förderpumpen, welche zum Fördern für Kraftstoff in einem Kraftstoffeinspritzsystem, insbesondere in Dieseleinspritzsystemen, angeordnet sind, benötigen jedoch zusätzliche Heizelemente im Niederdrucksystem, um eine schnelle Aufwärmung des Kraftstoffs zu erreichen. Eine schnelle Aufwärmung des Kraftstoffs, der durch die elektrische Förderpumpe fließt, ist beispielsweise erforderlich, um zu vermeiden, dass sich in einem druckseitig angeordneten Filter keine kältebedingten Paraffinabscheidungen ansammeln können, oder bereits vorhandene "aufgetaut" werden. Hierzu ist bei den bekannten Kraftstoffeinspritzsystemen eine separate Filterheizung nötig, welche jedoch eine eigene Filterheizpatrone sowie eine dazugehörige Ansteuerung erforderlich macht.

Eine weitere Maßnahme, um ein schnelles Aufheizen des Kraftstoffs im Niederdruckkreislauf zu erzielen, ist das Vorsehen von Umschaltventilen in saugseitigen Filtersystemen, welche ein rasches Aufheizen des gesamten Systems bewirken.

Die aus dem Stand der Technik bekannten Lösungen zum schnellen Aufheizen des Kraftstoffs im Niederdruckkreislauf sind jedoch konstruktiv aufwändig demzufolge auch teuer.

Daher ist es erforderlich, eine elektrische Kraftstoffpumpe vorzusehen, mittels welcher ein schnelles Aufheizen des Kraftstoffs im Niederdruckkreislauf ohne zusätzliche Heizelemente oder andere Bauelemente wie beispielsweise Umschaltventile, realisiert werden kann.

### Offenbarung der Erfindung

### Vorteile der Erfindung

Erfindungsgemäß wird eine elektrische Kraftstoffpumpe zum Fördern eines fluidförmigen Mediums, insbesondere zum Fördern von Kraftstoff in einem Kraftstoffeinspritzsystem, vorgesehen, welche eine Pumpeneinheit und eine Antriebseinheit aufweist, wobei die Antriebseinheit einen Motor mit einer Vielzahl von Wicklungen umfasst, welche mit Strom beaufschlagbar sind, um ein umlaufendes Magnetfeld zu erzeugen. Der Motor ist mit einem von einem hochfrequenten Stromanteil überlagerten Wechselstrom betreibbar. Da dem wechselnden Strom ein hochfrequenter Stromanteil hinzugefügt wird, wird einerseits zwar der Wirkungsgrad der elektrischen Förderpumpe "verschlechtert", jedoch wird durch den hochfrequenten Stormanteil Wärme zum Heizen des zu fördernden und die Wicklungen und anderen Antriebsteile umströmenden Kraftstoffs erzeugt. Der Motorbetrieb bleibt von dieser hochfrequenten Überlagerung unbeeinflusst, da die Mechanik den hohen Frequenzen nicht folgen kann. Aufgrund der Hystereseverluste im Stator und Rotor und der Wirbelstromverluste im Stator können alle Bauteile des Motors aufgeheizt werden. Die entstehende Wärme kann so besonders leicht an den geförderten Kraftstoff abgegeben werden. Erfindungsgemäß ist die durch den zusätzlichen hochfrequenten Anteil erzielte Heizleistung in Abhängigkeit von der gewünschten Heizleistung regelbar und die Wicklungen der Vielzahl von Wicklungen sind fest mit einer jeweiligen Leistungsendstufe einer Leistungselektronik verbunden, welche beliebig ansteuerbar ist. Mittels der erfindungsgemäßen Konfiguration, in welcher der Motor mit einem Wechselstrom, dem ein hochfrequenter Stromanteil hinzugefügt ist, betreibbar ist, kann der zu fördernde Kraftstoff ohne zusätzliche Bauteile und Elektronikkomponenten geheizt werden, wodurch eine deutliche Kostenreduzierung erzielt wird. Außerdem ist die Heizleistung stufenlos regelbar und kann so optimal an die Umgebungsbedingungen angepasst werden. Dadurch kann, verglichen mit einem konventionellen Heizsystem, welches stets ungeregelt ausgebildet ist, Energie und damit auch CO₂ eingespart werden. Somit stellt die erfindungsgemäße Konfiguration auch eine umweltschonende Lösung dar. Durch die erfindungsgemäße Lösung kann auch eine generell schnellere Systemerwärmung erzielt werden, auch wenn keine direkte Wärmekopplung zwischen der elektrischen Förderpumpe und dem Filter vorhanden ist. Dadurch kann auch auf zusätzliche Umschaltventile verzichtet werden.

Gemäß einer bevorzugten Ausführungsform dienen die Wicklungen des Motors als Heizung, insbesondere als Kraftstoffheizung. Somit kann ohne zusätzliche Heizelemente eine schnelle und effektive Aufheizung des zu fördernden Kraftstoffs erzielt werden.

Vorzugsweise sind die Pumpeneinheit und die Antriebseinheit gemeinsam in einem Gehäuse angeordnet, was eine besonders kompakte und platzsparende Bauform vorsieht.

Vorzugsweise ist der Motor ein elektronisch kommutierter Motor.

Gemäß einer weiteren bevorzugten Ausführungsform ist die Antriebseinheit von dem zu fördernden Kraftstoff durchströmbar. Durch die thermische Anbindung der Antriebseinheit wird der zu fördernde Kraftstoff schnell und effektiv ohne zusätzliche Heizelementen aufgeheizt, so dass Ansammlungen von kältebedingten Paraffinabscheidungen vermieden werden können.

Gemäß noch einer weiteren bevorzugten Ausführungsform sind die Wicklungen der Vielzahl von Wicklungen von dem zu fördernden fluidförmigen Medium umströmbar. Dies erzielt eine besonders effektive und schnelle Aufheizung des zu fördernden fluidförmigen Mediums.

Vorzugsweise ist druckseitig der elektrischen Förderpumpe ein Filter angeordnet.

Diese Ausführungsform ist besonders vorteilhaft, da das bereits in der elektrischen Kraftstoffpumpe aufgeheizte zu fördernde fluidförmige Medium direkt in den Filter strömt.

Auch kann der Filter saugseitig an der elektrischen Kraftstoffpumpe pe angeordnet sein. Dies ist beispielsweise in dem Fall von Vorteil, wenn die elektrische Kraftstoffpumpe mit dem Filter kombiniert ausgebildet ist und so ein Wärmetransport von der Antriebseinheit zu dem Filter erfolgen kann.

Vorzugsweise ist die elektrische Kraftstoffpumpe als Flügelzellenpumpe, Innenzahnradpumpe oder Außenzahnradpumpe ausgebildet.

Beispielsweise kann zum Antreiben einer elektrischen Kraftstoffpumpe ein Verfahren bereitgestellt werden, wobei Wicklungen eines Motors der elektrischen Kraftstoffpumpe derartig mit einem Wechselstrom beaufschlagt werden, dass ein Drehmoment am Motor entsteht, wobei der Wechselstrom von einem hochfrequenten Stromanteil überlagert wird, um Wärme zu erzeugen, welche über die Wicklungen abgegeben wird. Somit kann der zu fördernde Kraftstoff direkt beim Durchströmen der elektrischen Förderpumpe ohne Vorsehen von zusätzlichen Heizelementen, Regelungen oder Umschaltventilen schnell und effektiv erwärmt werden.

Dabei erwärmt die von den Wicklungen abgegebene Wärme den durch die elektrische Förderpumpe geförderten Kraftstoff.

Beispielsweise, wenn der Motor ein elektronisch kommutierter Motor ist.

### Kurze Beschreibung der Zeichnungen

Im Nachfolgenden werden Ausführungsbeispiele der Erfindung unter Bezugnahme auf die beigefügten Zeichnungen näher beschrieben. Es zeigt:
- Fig. 1: ein Hydraulikschema eines Kraftstoffeinspritzsystems gemäß einer Ausführungsform,
- Fig. 2: ein Hydraulikschema eines Kraftstoffeinspritzsystems gemäß einer weiteren Ausführungsform;
- Fig. 3: ein Hydraulikschema eines Kraftstoffeinspritzsystems gemäß noch einer weiteren Ausführungsform;
- Fig. 4: ein Strom-Zeit-Diagramm eines Wechselstroms; und
- Fig. 5: ein Strom-Zeit-Diagramm eines mit einem hochfrequenten Stromanteil beaufschlagten Wechselstroms.

### Ausführungsformen der Erfindung

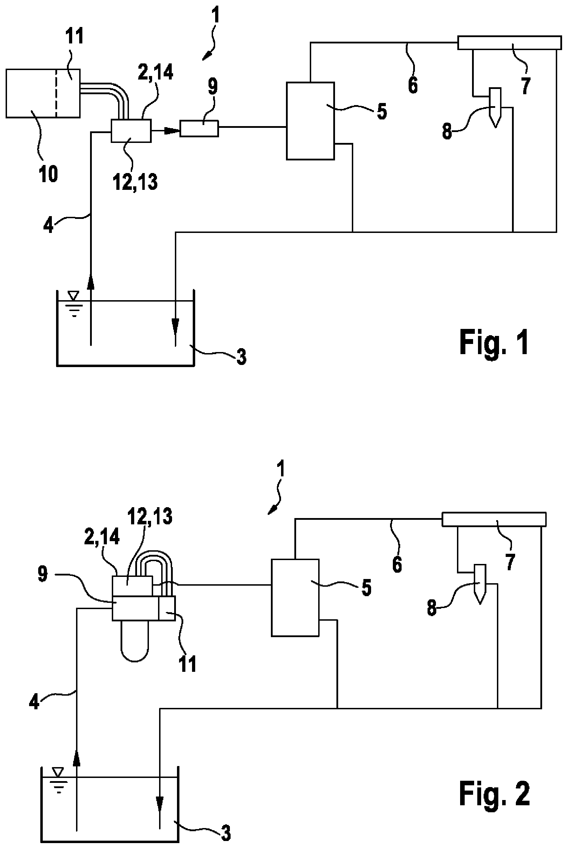

In Fig. 1 ist ein Hydraulikschema eines Kraftstoffeinspritzsystems 1 einer Brennkraftmaschine gemäß einer Ausführungsform dargestellt. Eine geregelte elektrische Kraftstoffpumpe 2 pumpt Kraftstoff von einem Kraftstoffbehälter 3 über eine Leitung 4 zu einer Hochdruckpumpe 5. Der durch die Hochdruckpumpe 5 geförderte Kraftstoff wird über eine Hochdruckleitung 6 in einen Hochdruckspeicher 7 gefördert. Von dem Hochdruckspeicher 7 kann Kraftstoff über Einspritzventile 8 in Brennräume der Brennkraftmaschine (nicht dargestellte) eingespritzt werden. In der in Fig. 1 dargestellten Ausführungsform ist ein Filter 9 druckseitig der elektrischen Kraftstoffpumpe 2 angeordnet. Ein Motorsteuergerät 10 umfasst eine Leistungselektronik 11, welche mit der elektrischen Kraftstoffpumpe 2 verbunden ist, um die Leistung der elektrischen Kraftstoffpumpe 2 zu steuern.

In Fig. 2 ist ein Hydraulikschema eines Kraftstoffeinspritzsystems 1 einer Brennkraftmaschine gemäß einer weiteren Ausführungsform dargestellt. Die hier dargestellte Ausführungsform unterscheidet sich von der in Fig. 1 dargestellten Ausführungsform dadurch, dass der Filter 9 nicht druckseitig sondern saugseitig der elektrischen Kraftstoffpumpe 2 angeordnet ist. Darüber hinaus ist der Filter 9 mit der elektrischen Kraftstoffpumpe 2 kombiniert, wodurch eine gute thermische Kopplung der beiden Bauteile erzielt wird.

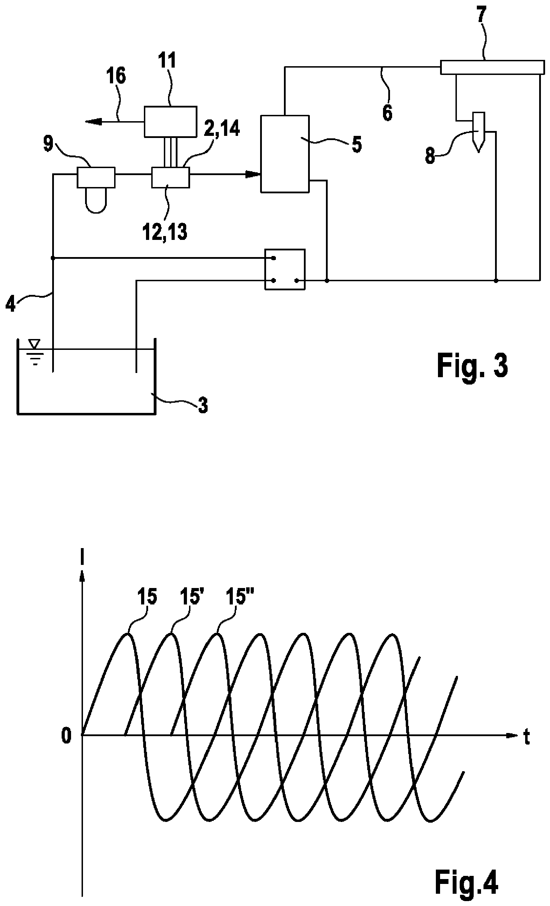

In Fig. 3 ist ein Hydraulikschema eines Kraftstoffeinspritzsystems 1 einer Brennkraftmaschine gemäß noch einer weiteren Ausführungsform dargestellt. Die hier dargestellte Ausführungsform unterscheidet sich von der in Fig. 2 dargestellten Ausführungsform lediglich dadurch, dass der saugseitig der elektrischen Förderpumpe 2 angeordnete Filter 9 getrennt von der Kraftstoffpumpe 2 vorgesehen ist. Durch den durch das Bezugszeichen 16 gekennzeichneten Pfeil wird eine Verbindung der Leistungselektronik 11 zu dem Motorsteuergerät 10 angedeutet. Weiterhin erfolgt bei dieser Ausführungsform eine temperaturabhängige Umschaltung durch die Schalteinrichtung 17.

Die jeweils in den in Fig. 1, 2 und 3 dargestellten Kraftstoffeinspritzsystemen 1 angeordneten elektrischen Kraftstoffpumpe 2 sind von der sogenannten "integrierten Bauform". Dabei ist die elektrische Kraftstoffpumpe 2, wie bereits erwähnt, derartig aufgebaut, dass sie eine Antriebseinheit 12 und eine Pumpeneinheit 13 umfasst, welche in den Figuren nicht im Detail dargestellt sind, sondern nur schematisch angedeutet sind, welche jedoch als nicht trennbare Einheit ausgebildet und gemeinsam in einem Gehäuse 14 angeordnet sind. Darüber hinaus arbeiten die in Fig. 1, 2 und 3 dargestellten elektrischen Kraftstoffpumpe 2 wie folgt. Der Antrieb der geregelten elektrischen Kraftstoffpumpe 2 ist ein elektronisch kommutierter Motor (nicht im Detail dargestellt), welcher Wicklungen besitzt, die fest mit einer jeweiligen Leistungsendstufe der Leistungselektronik 11 verbunden sind und beliebig angesteuert werden können. Für den Antrieb der elektrischen Kraftstoffpumpe 2 werden die Wicklungen so mit Strom beaufschlagt, dass ein umlaufendes Magnetfeld erreicht wird. Dem wechselnden Strom wird außerdem ein hochfrequenter Stromanteil hinzugefügt. Der Motorbetrieb bleibt, wie bereits erwähnt, von der hochfrequenten Überlagerung unbeeinflusst, da die Mechanik diesen hohen Frequenzen nicht folgen kann. Aufgrund der Hystereseverluste in Stator und Rotor und der Wirbelstromverluste im Stator werden jedoch alle Bauteile des Motors aufgeheizt. Die entstandene Wärme wird an den die Bauteile des Motors umströmenden Kraftstoff weitergegeben. Durch sozusagen bewusstes Verschlechtern des Wirkungsgrads des Motors kann somit die gewünschte Heizleistung in den die elektrische Kraftstoffpumpe 2 durchfließenden Kraftstoff eingebracht werden, um diesen ausreichend aufzuheizen, so dass sich keine kältebedingten Paraffinabscheidungen in dem Filter 9 ansammeln können bzw. dass bereits vorhandene Paraffinabscheidungen "aufgetaut" werden. Es sind keine zusätzlichen Heizelemente erforderlich und eine stufenlose Regelung der Heizleistung, z. B. an die Umgebungsbedingungen angepasst, wird ebenfalls ermöglicht.

Fig. 4 zeigt ein Strom-Zeit-Diagramm eines an die elektrische Kraftstoffpumpe 2 angelegten Wechselstroms, welcher durch einen sinusförmigen Verlauf der Strom-Zeit-Kurve gekennzeichnet ist. Jede der Kurven kennzeichnet dabei den an eine von der Vielzahl von Wicklungen 15, 15', 15" des Motors angelegten Wechselstrom. In diesem Ausführungsbeispiel wird das Drehfeld über drei Phasen erzeugt. Wie oben bereits beschrieben, ist jede von der Vielzahl von Wicklungen 15, 15', 15" mit einer jeweiligen Leistungsendstufe verbunden und durch die Leistungselektronik 11 beliebig ansteuerbar.

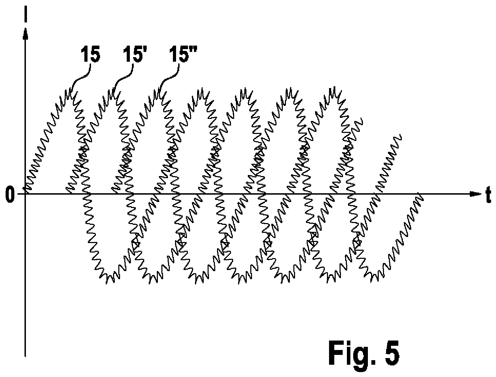

Fig. 5 zeigt ein Strom-Zeit-Diagramm eines an die elektrische Kraftstoffpumpe 2 angelegten Wechselstroms, der durch einen hochfrequenten Stromanteil überlagert wird, so dass auf die oben beschriebene Art und Weise Wärme entsteht, welche über die Vielzahl von Wicklungen 15, 15', 15" direkt an den die Wicklungen umfließenden Kraftstoff abgegeben wird, um diesen auf eine gewünschte Temperatur zu erhitzen. Auch andere Bauteile des Motors werden durch die so entstehende Wärme aufgeheizt und geben diese Wärme an den die Bauteile umströmenden Kraftstoff weiter.

Bei der elektrischen Kraftstoffpumpe 2 gemäß der Erfindung wird ohne zusätzliche Bauteile und Elektronikkomponenten eine effektive Heizung für den zu fördernden Kraftstoff bereitgestellt, wobei die Heizleistung darüber hinaus stufenlos regelbar ist.

## Patentansprüche

1. Elektrische Kraftstoffpumpe (2) zum Fördern von Kraftstoff in einem Kraftstoffeinspritzsystem (1), welche eine Pumpeneinheit (13) und eine Antriebseinheit (12) aufweist, wobei die Antriebseinheit (12) einen Motor mit einer Vielzahl von Wicklungen (15, 15', 15") umfasst, welche mit Strom beaufschlagbar sind, insbesondere um ein umlaufendes Magnetfeld zu erzeugen, wobei
der Motor mit einem von einem hochfrequenten Stromanteil überlagerten Wechselstrom betreibbar ist, um Wärme zum Heizen des zu fördernden Kraftstoffes zu erzeugen, **dadurch gekennzeichnet, dass**
die durch den zusätzlichen hochfrequenten Anteil erzielte Heizleistung in Abhängigkeit von der gewünschten Heizleistung regelbar ist und die Wicklungen der Vielzahl von Wicklungen (15, 15', 15") fest mit einer jeweiligen Leistungsendstufe einer Leistungselektronik (11) verbunden sind, welche beliebig ansteuerbar ist.

2. Elektrische Kraftstoffpumpe (2) gemäß Anspruch 1,
**dadurch gekennzeichnet, dass**
die Wicklungen des Motors als Heizung, insbesondere als Kraftstoffheizung dienen.

3. Elektrische Kraftstoffpumpe (2) gemäß Anspruch 1 oder 2,
**dadurch gekennzeichnet, dass**
die Pumpeneinheit (13) und die Antriebseinheit (12) gemeinsam in einem Gehäuse (14) angeordnet sind.

4. Elektrische Kraftstoffpumpe (2) nach einem oder mehreren der Ansprüche 1 bis 3,
**dadurch gekennzeichnet, dass**
der Motor ein elektronisch kommutierter Motor ist.

5. Elektrische Kraftstoffpumpe (2) nach einem oder mehreren der Ansprüche 1 bis 4,
**dadurch gekennzeichnet, dass**
die Antriebseinheit (12) von dem fördernden Kraftstoff durchströmbar ist

6. Elektrische Kraftstoffpumpe (2) nach einem oder mehreren der Ansprüche 1 bis 5,
**dadurch gekennzeichnet, dass**
druckseitig der elektrischen Kraftstoffpumpe (2) ein Filter (9) angeordnet ist, oder dass saugseitig der elektrischen Kraftstoffpumpe (2) ein Filter (9) angeordnet ist.

7. Elektrische Kraftstoffpumpe (2) nach einem oder mehreren der Ansprüche 1 bis 6,
**dadurch gekennzeichnet, dass**
die elektrische Kraftstoffpumpe (2) als Flügelzellenpumpe, Innenzahnradpumpe oder Außenzahnradpumpe ausgebildet ist.

8. Elektrische Kraftstoffpumpe (2) nach einem oder mehreren der Ansprüche 1 bis 7,
**dadurch gekennzeichnet, dass**
die Heizleistung stufenlos regelbar ist.

9. Elektrische Kraftstoffpumpe (2) nach einem oder mehreren der Ansprüche 1 bis 8,
**dadurch gekennzeichnet, dass**
die Wicklungen (15, 15', 15") der Vielzahl von Wicklungen (15, 15', 15") von dem zu fördernden Kraftstoff umströmbar sind.

## Claims

1. Electric fuel pump (2) for conveying fuel in a fuel injection system (1), which fuel pump has a pump unit (13) and a drive unit (12), wherein the drive unit (12) comprises a motor with a multiplicity of windings (15, 15', 15'') which can have electrical current applied thereto, in particular in order to generate a rotating magnetic field, wherein
the motor can be operated with an alternating current with a high-frequency current component superposed thereon in order to generate heat for heating the fuel to be conveyed, **characterized in that**
the heating power obtained by means of the additional high-frequency component is controllable in a manner dependent on the desired heating power, and the windings of the multiplicity of windings (15, 15', 15'') are fixedly connected to a respective power output stage of a power electronics unit (11), which is activatable as desired.

2. Electric fuel pump (2) according to Claim 1,
**characterized in that**
the windings of the motor serve as a heater, in particular as a fuel heater.

3. Electric fuel pump (2) according to Claim 1 or 2,
**characterized in that**
the pump unit (13) and the drive unit (12) are arranged together in one housing (14).

4. Electric fuel pump (2) according to one or more of Claims 1 to 3,
**characterized in that**
the motor is an electronically commutated motor.

5. Electric fuel pump (2) according to one or more of Claims 1 to 4,
**characterized in that**
the drive unit (12) can be flowed through by the conveying fuel.

6. Electric fuel pump (2) according to one or more of Claims 1 to 5,
**characterized in that**
a filter (9) is arranged at the pressure side of the electric fuel pump (2), or **in that** a filter (9) is arranged at the suction side of the electric fuel pump (2).

7. Electric fuel pump (2) according to one or more of Claims 1 to 6,
**characterized in that**
the electric fuel pump (2) is formed as a vane-type pump, internal-gear pump or external-gear pump.

8. Electric fuel pump (2) according to one or more of Claims 1 to 7,
**characterized in that**
the heating power is controllable in continuously variable fashion.

9. Electric fuel pump (2) according to one or more of Claims 1 to 8,
**characterized in that**
the windings (15, 15', 15'') of the multiplicity of windings (15, 15', 15'') can be flowed around by the fuel to be conveyed.

## Revendications

1. Pompe à carburant électrique (2) destinée à refouler du carburant dans un système d'injection de carburant (1), laquelle comporte une unité de pompage (13) et une unité d'entraînement (12), l'unité d'entraînement (12) comportant un moteur pourvu d'une pluralité d'enroulements (15, 15', 15''), lesquels peuvent être alimentés avec du courant, notamment en vue de générer un champ magnétique tournant,
le moteur pouvant fonctionner avec un courant alternatif auquel est superposée une composante de courant à haute fréquence afin de générer de la chaleur destinée à chauffer le carburant à refouler, **caractérisée en ce que** la puissance de chauffage obtenue par la composante à haute fréquence supplémentaire peut être régulée en fonction de la puissance de chauffage souhaitée et les enroulements de la pluralité d'enroulements (15, 15', 15'') sont reliés à demeure à un étage final de puissance respectif d'une électronique de puissance (11) qui peut être pilotée de manière quelconque.

2. Pompe à carburant électrique (2) selon la revendication 1, **caractérisée en ce que** les enroulements du moteur servent de chauffage, notamment de chauffage du carburant.

3. Pompe à carburant électrique (2) selon la revendication 1 ou 2, **caractérisée en ce que** l'unité de pompage (13) et l'unité d'entraînement (12) sont disposées en commun dans un carter (14).

4. Pompe à carburant électrique (2) selon une ou plusieurs des revendications 1 à 3, **caractérisée en ce que** le moteur est un moteur à commutation électronique.

5. Pompe à carburant électrique (2) selon une ou plusieurs des revendications 1 à 4, **caractérisée en ce que** l'unité d'entraînement (12) peut être traversée par le carburant à refouler.

6. Pompe à carburant électrique (2) selon une ou plusieurs des revendications 1 à 5, **caractérisée en ce qu'**un filtre (9) est disposé du côté refoulement de la pompe à carburant électrique (2), ou **en ce qu'**un filtre (9) est disposé du côté aspiration de la pompe à carburant électrique (2).

7. Pompe à carburant électrique (2) selon une ou plusieurs des revendications 1 à 6, **caractérisée en ce que** la pompe à carburant électrique (2) est réalisée sous la forme d'une pompe à palettes, d'une pompe à engrenage intérieur ou d'une pompe à engrenage extérieur.

8. Pompe à carburant électrique (2) selon une ou plusieurs des revendications 1 à 7, **caractérisée en ce que** la puissance de chauffage peut être régulée en continu.

9. Pompe à carburant électrique (2) selon une ou plusieurs des revendications 1 à 8, **caractérisée en ce que** le carburant à refouler peut circuler autour des enroulements (15, 15', 15'') de la pluralité d'enroulements (15, 15', 15'').
